# EUROPÄISCHE PATENTSCHRIFT

(11) **EP 1 710 541 B1**
(45) Veröffentlichungstag und Bekanntmachung des Hinweises auf die Patenterteilung: **04.06.2008**
(21) Anmeldenummer: 06100174.9
(22) Anmeldetag: 09.01.2006
(51) Int. Cl.: G01D 5/14, G01B 7/30, G01D 5/16

(54) **Sensor zur Messung der Position eines Stellgliedes**
Sensor for measuring the position of an actuator
Procédé destiné à la mesure de la position d'un actionneur

(30) Priorität: 08.04.2005 DE 102005016267
(43) Veröffentlichungstag der Anmeldung: 11.10.2006
(73) Patentinhaber: Continental Automotive GmbH, 30165 Hannover (DE)
(72) Erfinder: Wallrafen, Werner, 65719, Hofheim am Taunus (DE)

(56) Entgegenhaltungen:
- EP-A- 1 319 820
- WO-A-20/06008217
- DE-A1- 19 937 155
- US-A- 4 760 824
- US-A- 5 482 019

## Beschreibung

Die Erfindung betrifft einen Sensor zur Messung der Position eines über einen Antriebsanschluss elektromotorisch betriebenen Stellgliedes einer Brennkraftmaschine, wobei im Gehäuse des Stellgliedes mindestens ein Positionssensor angeordnet ist, der die Position an dem Antriebsanschluss erfasst.

An Sensoren dieser Art werden extrem hohe Zuverlässigkeitsanforderungen gestellt, da Fehlfunktionen oder Ausfälle unter Umständen auch Risiken hervorrufen können. Dies betrifft sowohl den Sensor selbst als auch dessen elektrische Verbindungen zu Schaltungen, welche den Sensor mit Betriebsspannung versorgen und die Ausgangssignale des Sensors empfangen und auswerten.

Dabei können die dazu benutzten Kabelverbindungen und Kontaktstellen Fehlerursachen darstellen, die selbst bei einer zweifachen Ausführung der Sensoren und der Verbindungselemente aus Redundanzgründen in sicherheitsrelevanten Systemen zu gravierenden Fehlern führen können. Ferner wird durch die zunehmende Einführung von elektronischen Geräten in Kraftfahrzeugen die Anzahl der Kabelverbindungen ständig größer, wobei aus Kosten- und Gewichtsgründen eine Verlegung von vielen Leitungen nachteilig ist.

In einer älteren Anmeldung, die als WO 2006/008217 A1 veröffentlicht wurde, wird ein Sensor zur Messung der Position eines über einen Antriebsanschluss elektromotorisch betriebenen Stellgliedes einer Brennkraftmaschine beschrieben, wobei im Gehäuse des Stellgliedes mindestens ein Positionssensor angeordnet ist, der die Position an dem Antriebsanschluss erfasst, ist mindestens ein Positionssensor mit einer Schaltung verbunden, die eine Betriebsspannungsquelle enthält und Signale von dem mindestens einen Positionssensor empfängt. Die Verbindung zwischen der Schaltung und dem mindestens einen Positionssensor erfolgt über eine Spannung und Signal führende Leitung. In der Schaltung ist mindestens eine Strommesseinrichtung in Reihe zur Betriebsspannungsquelle angeschlossen. Über die Signale des mindestens einen Positionssensor in Abhängigkeit von der Position des Stellgliedes wird eine Stromänderung über die Leitung übertragen.

Aus DE 199 37 155 A1 ist ein System zur Erzeugung eines Signals zur Überlagerung von Informationen bekannt, wobei unter anderem eine steuerbare Stromquelle innerhalb eines Sensors mit Zusatzsignalen vorgesehen ist, welche Impulse an eine Auswerteschaltung abgibt, die wiederum die steuerbare Stromquelle mit Spannung versorgt. Die Sensorschaltung als solche benötigt jedoch eine eigene Stromversorgung.

Aufgabe der vorliegenden Erfindung ist es, einen Sensor der eingangs genannten Art anzugeben, der sich durch hohe Zuverlässigkeit und geringe Kosten auszeichnet.

Diese Aufgabe wird erfindungsgemäß dadurch gelöst, dass mindestens ein Positionssensor mit einer Schaltung verbunden ist, die Signale von dem mindestens einen Positionssensor empfängt, dass die Verbindung zwischen der Schaltung und dem mindestens einen Positionssensor über eine Spannung und Signal führende Leitung erfolgt, an die in der Schaltung mindestens eine Strommesseinrichtung angeschlossen ist, dass in einem von der Leitung, dem mindestens einen Positionssensor und der mindestens einen Strommesseinrichtung gebildeten Stromkreis eine Betriebsspannungsquelle angeordnet ist und dass über die Signale des mindestens einen Positionssensors in Abhängigkeit von der Position des Stellgliedes eine Stromänderung über die Leitung übertragen wird und dass die Betriebsspannungsquelle zwischen dem mindestens einen Positionssensor und der Schaltung in einer mit Masse verbundenen Leitung angeordnet ist.

Der erfindungsgemäße Sensor ist in vorteilhafter Weise gegen äußere Einflüsse geschützt. Er selbst und Leitungsverbindungen bis zu einer Steckvorrichtung sind robuster und trotzdem preiswert herstellbar. Außerdem wird die Anzahl der erforderlichen Leitungen gegenüber bekannten Sensoren verringert.

Bei der Erfindung ist vorzugsweise vorgesehen, dass die Stromänderung binär mit einem Strompegel und einem anderen Strompegel ist, wobei der eine Strompegel dem durch eine Spannungsstabilisierungsschaltung im mindestens einen Positionssensor und durch die Betriebsspannungsquelle fließenden Strom und ein anderer Strompegel dem durch eine als Funktion der Signale zuschaltbare Last im Positionssensor erhöhten Strom entspricht.

Außer der Einsparung von Leitungen weist diese Weiterbildung der Erfindung den Vorteil auf, dass die Übertragungssicherheit an den Kontakten dadurch erhöht wird, dass der Strom durch die Kontakte einen kritischen Mindestwert nicht unterschreitet. Dadurch kann in den meisten Fällen auf Vergoldung der Kontakte verzichtet werden. Darüber hinaus führen bei der Erfindung Übergangswiderstände an Leitungen und Kontakten nicht zu Signaländerungen, wie es bei analogen Signalübertragungen bekannt ist.

Die binären Ausgangssignale können in jeweils zweckmäßiger Weise codiert sein, beispielsweise pulsbreitenmoduliert, frequenzmoduliert, manchestercodiert oder andere serielle Übertragungsverfahren. Die Ausgangssignale können nicht nur die Ausgangsgrößen des Positionssensors umfassen, sondern auch noch andere Daten, wie Diagnose und/oder Temperatur. Die Positionssensoren selbst können Hallsensoren sein oder auf magnetoresistiver oder induktiver Basis arbeiten.

Gegenüber Schnittstellen mit Analogsignalen hat die nach der Weiterbildung vorgesehene Schnittstelle den Vorteil einer höheren Sicherheit gegen Störsignale. Außerdem ergeben sich Einsparungen im Bereich der Analog/Digital-Umsetzung. Ferner ist ein Verpolungsschutz und ein Überspannungsschutz einfacher realisierbar, da kein ratiometrisches Analogsignal verwendet wird.

Die Weiterbildung kann auch derart ausgestaltet sein, dass bei mehreren Positionssensoren die Abhängigkeit der Signale von der Position des Stellgliedes von Positionssensor zu Positionssensor verschieden ist. Diese Maßnahme dient der Sicherheit für den Fall, dass die Leitungen beider Positionssensoren kurzgeschlossen werden und dies nicht in der Schaltung erkannt werden kann.

Eine vorteilhafte Ausführungsform der Erfindung besteht darin, dass zwei Positionssensoren über je zwei Leitungen mit der Schaltung verbunden sind und dass je Positionssensor eine Strommesseinrichtung vorgesehen ist. Demgegenüber kann die erfindungsgemäße Einrichtung bei verminderter Redundanz, jedoch auch bei geringerem Materialaufwand derart ausgebildet sein, dass zwei Positionssensoren über je eine Leitung und eine gemeinsame Leitung mit der Schaltung verbunden sind und dass je Positionssensor eine Strommesseinrichtung vorgesehen ist.

Bei diesen Weiterbildungen ist im Wesentlichen vorgesehen, dass zwei Sensoren verwendet werden, wobei sich im Falle von vier Leitungen - gegenüber sechs Leitungen bei konventioneller Technik - eine sehr hohe Systemverfügbarkeit gegeben ist, da bei jedem theoretischen Fehlerfall das System auf einem Kanal (Sensor + Leitungen) weiter betrieben werden kann.

Ferner ist bei der erfindungsgemäßen Einrichtung vorzugsweise vorgesehen, dass den Positionssensoren ein gemeinsames bewegliches Element zur Positionserfassung zugeordnet ist.

Eine andere vorteilhafte Ausgestaltung der erfindungsgemäßen Einrichtung besteht darin, dass die Strommesseinrichtung von einem Strommesswiderstand und einer Schwellwertschaltung gebildet ist.

Besonders zuverlässige und mechanisch stabile Ausführungen ergeben sich dadurch, dass die Positionssensoren jeweils als eine integrierte Schaltung mit zwei Anschlussstiften aufgebaut sind, die mit einem Metallgitter (lead frame) verschweißt sind, das in einem aus Kunststoff bestehenden Deckel des Gehäuses eingebettet ist. Zwei Anschlussstifte lassen sich zuverlässiger in automatischen Prozessen schweißen als drei oder mehr Anschlussstifte.

Die elektromagnetische Verträglichkeit kann bei der erfindungsgemäßen Einrichtung dadurch verbessert werden, dass die für die Leitungen vorgesehenen Anschlüsse des mindestens einen Positionssensors miteinander, vorzugsweise in der Nähe des Positionssensors, mit einem Kondensator verbunden sind. Dabei ist es vorteilhaft, wenn der Kondensator zusammen mit dem Positionssensor mit Kunststoff umspritzt ist.

Die Betriebsspannungsquelle kann an verschiedenen Stellen des Stromkreises angeordnet sein. Es hat sich beispielsweise als günstig erwiesen, wenn die Betriebsspannungsquelle in der Schaltung angeordnet ist.

Ein weiterer Vorteil der Zweidrahtverbindung liegt in der Einsparung eines zusätzlichen Kondensators, welcher bei analogen Sensoren für die Zuführung der Versorgungsspannung vorgesehen ist.

Ausführungsbeispiele der Erfindung sind in der Zeichnung anhand mehrerer Figuren dargestellt und in der nachfolgenden Beschreibung näher erläutert. Es zeigt:
- Fig. 1: ein Blockschaltbild eines ersten Sensors nach der älteren Anmeldung,
- Fig. 2: einen zweiten Sensor nach der älteren Anmeldung,
- Fig. 3: ein drittes Ausführungsbeispiel,
- Fig. 4A und Fig. 4B: Zeitdiagramme der in den Leitungen fließenden Ströme,
- Fig. 5: ein detaillierteres Schaltbild eines Positionssensors,
- Fig. 6: den Deckel eines elektromotorisch betriebenen Stellgliedes und
- Fig. 7: ein in dem Deckel eingebettetes Stanzgitter.

Bei den dargestellten Sensoren werden zwei Positionssensoren 1, 2 verwendet, um die Position eines beweglichen Gegenstandes 3 zu messen - beispielsweise eines Magneten. Zwei Positionssensoren werden zur Erhöhung der Sicherheit bei der Positionsmessung von sicherheitsrelevanten Vorrichtungen, beispielsweise der Drosselklappe eines Kraftfahrzeugmotors, verwendet. Die Positionssensoren sind als Baustein mit einer Kunststoffumhüllung 4 umspritzt. Sie verfügen jeweils über einen Anschluss 5, 6 und einen gemeinsamen Anschluss 7. Zur Verbindung mit entsprechenden Anschlüssen 8, 9, 10 einer Schaltung 11, die im folgenden auch Auswerteschaltung genannt wird, dienen Leitungen 18, 19, 20. Die Auswerteschaltung enthält eine Betriebsspannungsquelle 12, die jeweils über einen Strommesswiderstand 13, 14 mit den Anschlüssen 8, 9 und damit mit den Leitungen 18, 19 verbunden ist. Der Spannungsabfall von den Messwiderständen 13, 14 wird Verstärkern 15, 16 mit Schwellwertcharakteristik und Hysterese zugeführt, an deren Ausgängen 21, 22 Signale zur weiteren Verwendung zur Verfügung stehen.

Die Anschlüsse der Positionssensoren 1, 2 sind mit jeweils einem Kondensator 23, 24 überbrückt, um hochfrequente Einstrahlungen zu filtern. Die Kondensatoren 23, 24 sind derart bemessen, dass die von den Positionssensoren 1, 2 erzeugten Ausgangssignale nicht beeinträchtigt werden.

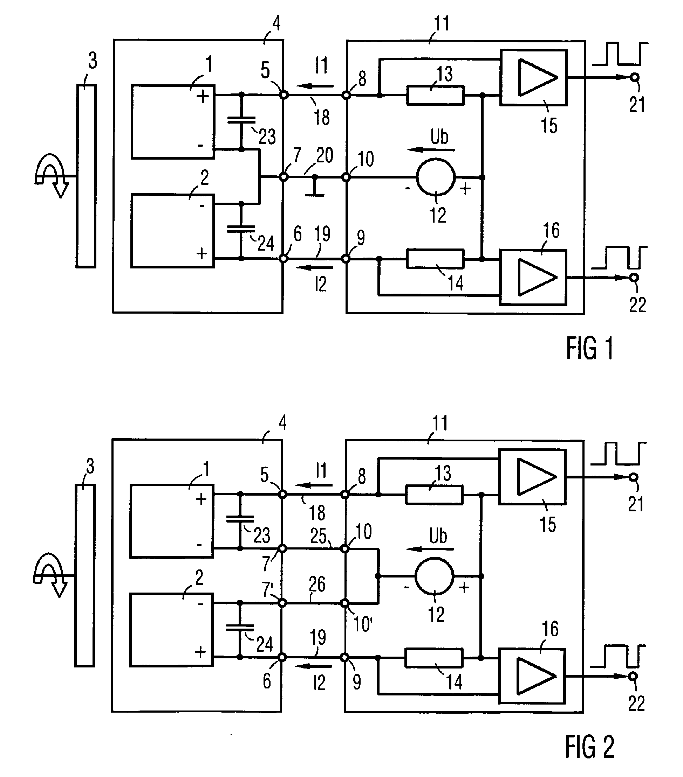

Die Einrichtung nach Fig. 2 unterscheidet sich von derjenigen nach Fig. 1 dadurch, dass anstelle einer gemeinsamen Leitung 20 (Fig. 1) jeweils eine Leitung 25, 26 je Positionssensor verwendet wird, die über Anschlüsse 7, 10 bzw. 7', 10' mit den Positionssensoren 1, 2 bzw. der Schaltung 11 verbunden ist. Dadurch ist zwar der Aufwand größer, im Falle einer Störung einer beliebigen Leitung ist jedoch der jeweils andere Positionssensor noch voll funktionsfähig.

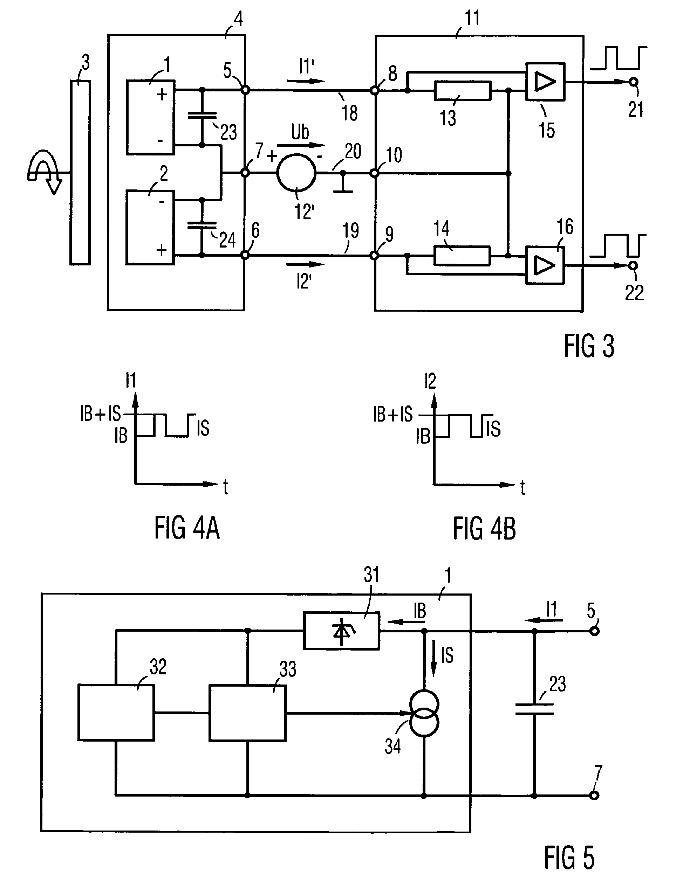

Bei dem Ausführungsbeispiel nach Fig. 3 ist die Betriebsspannungsquelle 12' in die Masseleitung 20 außerhalb der Schaltung 11 eingefügt. Damit die Polarität der Betriebsspannung der üblichen Festlegung folgt, ist der Minuspol mit Masse verbunden, weshalb die Positionssensoren 1, 2 mit entgegengesetzter Polarität angeschlossen sind und die Ströme I1' und I2' eine andere Richtung als bei den Sensoren nach den Figuren 1 und 2 einnehmen.

Die Figuren 4A und 4B zeigen den Verlauf der Ströme I1 und I2, die jeweils aus einem konstanten Anteil IB, der zum Betrieb des Positionssensors benötigt wird, und einem pulsierenden Anteil IS bestehen, welcher der Amplitude des Ausgangssignals entspricht.

Fig. 5 zeigt den Positionssensor 1 in etwas detaillierterer Darstellung. Von dem Anschluss 5 gelangt der Strom IB zur Spannungsstabilisierungsschaltung 31, welche den eigentlichen Sensor 32 und eine Signalaufbereitungsschaltung 33 versorgt. Diese erzeugt ein zur Ansteuerung einer Stromsenke 34 geeignetes Signal, das pulsierend den Strom IS dem Betriebsstrom IB zuschaltet.

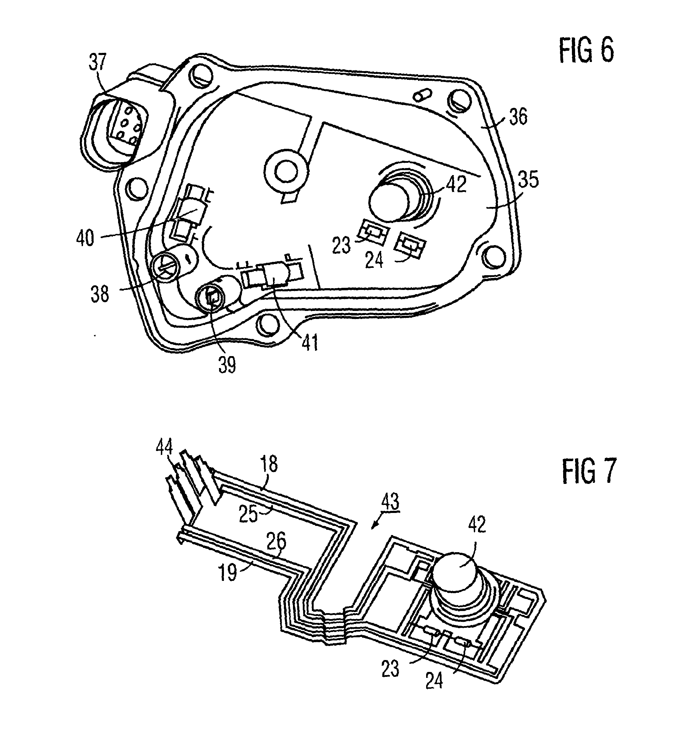

Fig. 6 zeigt den Deckel 35 eines nicht dargestellten Drosselklappengehäuses. Mit einem Flansch 36 wird der Deckel 35 mit dem Gehäuse verschraubt. An den Deckel 35 ist eine Mehrfachsteckvorrichtung 37 angeformt. Außerdem befinden sich zwei Steckverbinder 38, 39 an dem Deckel 35, welche im geschlossenen Zustand des Gehäuses eine Verbindung zwischen dem Stellmotor und der Steckvorrichtung 37 über Entstörmittel 40, 41 bilden. Diese sind in den aus Kunststoff bestehenden Deckel 35 eingebettet, ebenso wie als Stanzgitter ausgeführte Leitungen zwischen der Steckvorrichtung 37 und den Entstörmitteln 40, 41.

Fluchtend mit dem nicht dargestellten Antriebsanschluss der Drosselklappe ist im Deckel 35 ein Sensorkopf 42 angeordnet, der zwei Positionssensoren enthält und ebenfalls mit Leitungen 18, 19, 25, 26, die von einem Stanzgitter 43 (Fig. 7) gebildet sind, mit der Steckvorrichtung 37 verbunden ist. Das Stanzgitter 43 bildet gleichzeitig Kontaktstifte 44 der Steckvorrichtung 37. Die Kondensatoren 23, 24 sind in Fig. 6 nicht mit Kunststoff umspritzt dargestellt. Bei Vorliegen entsprechender Voraussetzungen ist es jedoch auch möglich, diese zu umspritzen.

## Patentansprüche

1. Sensor zur Messung der Position eines über einen Antriebsanschluss elektromotorisch betriebenen Stellgliedes einer Brennkraftmaschine, wobei im Gehäuse des Stellgliedes mindestens ein Positionssensor angeordnet ist, der die Position an dem Antriebsanschluss erfasst, **dadurch gekennzeichnet, dass** mindestens ein Positionssensor (1, 2) mit einer Schaltung (11) verbunden ist, die Signale von dem mindestens einen Positionssensor (1, 2) empfängt, dass die Verbindung zwischen der Schaltung (11) und dem mindestens einen Positionssensor (1, 2) über eine Spannung und Signal führende Leitung (18, 19) erfolgt, an die in der Schaltung (11) mindestens eine Strommesseinrichtung (13, 15; 14, 16) angeschlossen ist, dass in einem von der Leitung (18, 19), dem mindestens einen Positionssensor (1, 2) und der mindestens einen Strommesseinrichtung (13, 15; 14, 16) gebildeten Stromkreis eine Betriebsspannungsquelle (12, 12') angeordnet ist, dass über die Signale des mindestens einen Positionssensor (1, 2) in Abhängigkeit von der Position des Stellgliedes eine Stromänderung über die Leitung (18, 19) übertragen wird und dass die Betriebsspannungsquelle (12') zwischen dem mindestens einen Positionssensor (1, 2) und der Schaltung (11) in einer mit Masse verbundenen Leitung (20) angeordnet ist.

2. Sensor nach Anspruch 1, **dadurch gekennzeichnet, dass** die Stromänderung binär mit einem Strompegel und einem anderen Strompegel ist, wobei der eine Strompegel dem durch eine Spannungsstabilisierungsschaltung (31) im mindestens einen Positionssensor (1, 2) und durch die Betriebsspannungsquelle (12) fließenden Strom und ein anderer Strompegel dem durch eine als Funktion der Signale zuschaltbare Last (34) im Positionssensor (1, 2) erhöhten Strom entspricht.

3. Sensor nach einem der Ansprüche 1 oder 2, **dadurch gekennzeichnet, dass** bei mehreren Positionssensoren (1, 2) die Abhängigkeit der Signale von der Position des Stellgliedes von Positionssensor (1) zu Positionssensor (2) verschieden ist.

4. Sensor nach einem der Ansprüche 1 bis 3, **dadurch gekennzeichnet, dass** zwei Positionssensoren (1, 2) über je zwei Leitungen (18, 25; 19, 26) mit der Schaltung (11) verbunden sind und dass je Positionssensor (1, 2) eine Strommesseinrichtung (13, 15; 14, 16) vorgesehen ist.

5. Sensor nach einem der Ansprüche 1 bis 3, **dadurch gekennzeichnet, dass** zwei Positionssensoren (1, 2) über je eine Leitung (18, 19) und eine gemeinsame Leitung (20) mit der Schaltung (11) verbunden sind und dass je Positionssensor (1, 2) eine Strommesseinrichtung (13, 15; 14, 16) vorgesehen ist.

6. Sensor nach einem der Ansprüche 4 oder 5, **dadurch gekennzeichnet, dass** den Positionssensoren (1, 2) ein gemeinsames bewegliches Element (3) zur Positionserfassung zugeordnet ist.

7. Sensor nach einem der vorhergehenden Ansprüche, **dadurch gekennzeichnet, dass** die Strommesseinrichtung von einem Strommesswiderstand (13, 14) und einer Schwellwertschaltung (15, 16) gebildet ist.

8. Sensor nach einem der vorhergehenden Ansprüche, **dadurch gekennzeichnet, dass** die Positionssensoren (1, 2) jeweils als eine integrierte Schaltung mit zwei Anschlussstiften aufgebaut sind, die mit einem Stanzgitter (lead frame) verschweißt sind, das in einem aus Kunststoff bestehenden Deckel (35) des Gehäuses eingebettet ist.

9. Sensor nach einem der vorhergehenden Ansprüche, **dadurch gekennzeichnet, dass** die für die Leitungen (18, 19) vorgesehenen Anschlüsse des mindestens einen Positionssensors (1, 2) miteinander mit einem Kondensator (23, 24) verbunden sind.

10. Sensor nach Anspruch 9, **dadurch gekennzeichnet, dass** der Kondensator (23, 24) zusammen mit dem Positionssensor (1, 2) mit Kunststoff umspritzt ist.

11. Sensor nach einem der vorhergehenden Ansprüche, **dadurch gekennzeichnet, dass** die Betriebsspannungsquelle (12) in der Schaltung (11) angeordnet ist.

## Claims

1. Sensor for measuring the position of an actuator, which is electromotively operated via a drive connection, of an internal combustion engine, at least one position sensor being arranged in the housing of the actuator, which position sensor detects the position at the drive connection, **characterized in that** at least one position sensor (1, 2) is connected to a circuit (11), which receives signals from the at least one position sensor (1, 2), **in that** the connection between the circuit (11) and the at least one position sensor (1, 2) takes place via a voltage- and signal-carrying line (18, 19) to which at least one current measuring device (13, 15; 14, 16) is connected in the circuit (11), **in that** an operating voltage source (12, 12') is arranged in a circuit formed by the line (18, 19), the at least one position sensor (1, 2) and the at least one current measuring device (13, 15; 14, 16), **in that** a current change is transmitted over the line (18, 19) via the signals from the at least one position sensor (1, 2) depending on the position of the actuator and **in that** the operating voltage source (12') is arranged between the at least one position sensor (1, 2) and the circuit (11) in a line (20), which is connected to earth.

2. Sensor according to Claim 1, **characterized in that** the current change is binary with one current level and another current level, the one current level corresponding to the current flowing through a voltage stabilization circuit (31) in at least one position sensor (1, 2) and through the operating voltage source (12), and another current level corresponding to the current increased by a load (34), which can be connected as a function of the signals, in the position sensor (1, 2).

3. Sensor according to either of Claims 1 and 2, **characterized in that**, in the case of a plurality of position sensors (1, 2), the dependence of the signals on the position of the actuator is different from position sensor (1) to position sensor (2).

4. Sensor according to one of Claims 1 to 3, **characterized in that** two position sensors (1, 2) are connected to the circuit (11) via in each case two lines (18, 25; 19, 26), and **in that** one current measuring device (13, 15; 14, 16) is provided per position sensor (1, 2).

5. Sensor according to one of Claims 1 to 3, **characterized in that** two position sensors (1, 2) are connected to the circuit (11) via in each case one line (18, 19) and a common line (20), and **in that** one current measuring device (13, 15; 14, 16) is provided per position sensor (1, 2).

6. Sensor according to either of Claims 4 and 5, **characterized in that** a common movable element (3) for detecting the position is associated with the position sensors (1, 2).

7. Sensor according to one of the preceding claims, **characterized in that** the current measuring device is formed by a current measuring resistor (13, 14) and a threshold value circuit (15, 16).

8. Sensor according to one of the preceding claims, **characterized in that** the position sensors (1, 2) are each in the form of an integrated circuit with two connection pins, which are welded to a lead frame, which is embedded in a plastic cover (35) of the housing.

9. Sensor according to one of the preceding claims, **characterized in that** the connections, which are provided for the lines (18, 19), of the at least one position sensor (1, 2) are connected to one another by a capacitor (23, 24).

10. Sensor according to Claim 9, **characterized in that** the capacitor (23, 24), together with the position sensor (1, 2), has plastic injected around it.

11. Sensor according to one of the preceding claims, **characterized in that** the operating voltage source (12) is arranged in the circuit (11).

## Revendications

1. Capteur permettant de mesurer la position d'un actionneur de moteur à combustion interne commandé par moteur électrique par l'intermédiaire d'un raccord de commande, où, dans le boîtier de l'actionneur est disposé au moins un capteur de position qui détecte la position sur le raccord de commande, **caractérisé par le fait que** au moins un capteur de position (1, 2) est raccordé à un montage électrique (11), qui reçoit des signaux du au moins un capteur de position (1, 2), que la liaison entre le montage électrique (11) et le au moins un capteur de position (1, 2) se fait par l'intermédiaire d'un conducteur (18, 19), qui transmet la tension et le signal, et sur lequel est raccordé, dans le montage électrique (11), au moins un dispositif de mesure (13, 15; 14, 16) de l'intensité du courant, que, dans un circuit électrique formé par le conducteur (18, 19), le au moins un capteur de position (1, 2) et le au moins un dispositif de mesure (13, 15; 14, 16) de l'intensité du courant, est placée une source de tension de service (12, 12'), que, par l'intermédiaire des signaux du au moins un capteur de position (1, 2), une variation de l'intensité du courant en fonction de la position de l'actionneur est transmise sur le conducteur (18, 19) et que la source de tension de service (12') entre le au moins un capteur de position (1, 2) et le montage électrique (11) est placée sur un conducteur (20) relié à la masse.

2. Capteur selon la revendication 1, **caractérisé par le fait que** la variation de l'intensité du courant est binaire avec un niveau d'intensité et un autre niveau d'intensité, l'un des niveaux d'intensité correspondant au courant circulant à travers un circuit stabilisateur de tension (31) dans le au moins un capteur de position (1, 2) et à travers la source de tension de service (12) et un autre niveau d'intensité correspondant au courant dans le capteur de position (1, 2) augmenté d'une charge additionnelle (34) en tant que fonction des signaux.

3. Capteur selon l'une des revendications 1 ou 2, **caractérisé par le fait que,** dans le cas de plusieurs capteurs de position (1, 2), les signaux dépendent, de capteur de position (1) à capteur de position (2), d'une façon différente de la position de l'actionneur

4. Capteur selon l'une des revendications 1 à 3, **caractérisé par le fait que** deux capteurs de position (1, 2) sont reliés chacun par deux conducteurs (18, 25; 19, 26) au montage électrique (11) et qu'il est prévu un dispositif de mesure (13, 15; 14, 16) de l'intensité du courant par capteur de position (1, 2).

5. Capteur selon l'une des revendications 1 à 3, **caractérisé par le fait que** deux capteurs de position (1, 2) sont reliés chacun par un conducteur particulier (18, 19) et un conducteur commun (20) au montage électrique (11) et qu'il est prévu un dispositif de mesure (13, 15; 14, 16) de l'intensité du courant par capteur de position (1, 2).

6. Capteur selon l'une des revendications 4 ou 5, **caractérisé par le fait qu**'un organe mobile commun (3) destiné à la détection de la position est affecté aux capteurs de position (1, 2).

7. Capteur selon l'une des revendications précédentes, **caractérisé par le fait que** le dispositif de mesure de l'intensité du courant est formé par une résistance de mesure du courant (13, 14) et un circuit à valeur seuil (15, 16).

8. Capteur selon l'une des revendications précédentes, **caractérisé par le fait que** les capteurs de position (1, 2) sont chacun constitués d'un circuit intégré avec deux broches de raccordement qui sont soudées à une trame estampée (lead frame) noyée dans un couvercle (35) en matière plastique du boîtier.

9. Capteur selon l'une des revendications précédentes, **caractérisé par le fait que** les raccordements, prévus pour les conducteurs (18, 19), du au moins un capteur de position (1, 2) sont reliés l'un à l'autre par un condensateur (23, 24).

10. Capteur selon la revendication 9, **caractérisé par le fait que** le condensateur (23, 24) est enrobé de matière plastique en commun avec le capteur de position (1, 2).

11. Capteur selon l'une des revendications précédentes, **caractérisé par le fait que** la source de tension de service (12) est placée dans le montage électrique (11).
